# EUROPÄISCHE PATENTSCHRIFT

(11) **EP 1 112 779 B1**
(45) Veröffentlichungstag und Bekanntmachung des Hinweises auf die Patenterteilung: **03.03.2004**
(21) Anmeldenummer: 01108465.4
(22) Anmeldetag: 14.10.1999
(51) Int. Cl.: B05C 17/005, B01F 13/00

(54) **Vorrichtung zum Öffnen zweier jeweils eine pastöse Masse beinhaltendender Schlauchbeutel**
Opener for opening two tubular bags each comprising a paste
Dispositif pour ouvrir deux sachets tubulaires chaque contenant une matière pateuse

(30) Priorität: 14.10.1998 DE 29818280 U
(43) Veröffentlichungstag der Anmeldung: 04.07.2001
(62) Teilanmeldung aus: 99953813.5
(73) Patentinhaber: A. KETTENBACH GmbH & CO. KG., D-35713 Eschenburg (DE)
(72) Erfinder: Bublewitz, Alexander, 35745 Herborn (DE); Suchan, Matthias, 57627 Hachenburg (DE)
(74) Vertreter: Hilleringmann, Jochen, Dipl.-Ing.

(56) Entgegenhaltungen:
- DE-A- 3 823 708
- DE-C- 19 710 878
- US-A- 4 453 651
- US-A- 4 722 449
- US-A- 4 884 705
- US-A- 4 898 293

## Beschreibung

Die Erfindung betrifft eine Vorrichtung zum Öffnen zweier jeweils eine pastöse Masse beinhaltender Schlauchbeutel und zum Austragen der Massen im vermischten Zustand. Bei diesem pastösen Zweikomponenten-Gemisch handelt es sich z.B. um ein Gemisch aus einer Dental-Abformmasse und einem die Aushärtung initiierenden bzw. beschleunigenden Katalysator.

Zum Applizieren von Mehrkomponentenmaterialien als Gemisch sind Austragvorrichtungen bekannt, die ein Vorratsbehältnis mit mindestens zwei Kammern für jeweils eine der pastösen Komponenten des Gemisches aufweisen. Jeder Kammer ist ein Auslassstutzen zugeordnet, über den die pastöse Komponente bei Druckbeaufschlagung austritt. Damit die pastösen Komponenten als Gemisch ausgetragen werden können, wird bei den bekannten Vorrichtungen auf die Auslassstutzen eine Mischereinheit aufgesetzt, die ein Mischergehäuse mit einem im wesentlichen rohrförmigen Abschnitt und einem Kupplungsende zum Verbinden mit dem Vorratsbehältnis aufweist. In dem rohrförmigen Abschnitt des Mischergehäuses befindet sich ein Mischerelement, das zu einer Verwirbelung und Vermischung der über getrennte Kanäle zugeführten Komponenten sorgt. Diese Kanäle sind in dem Kupplungsende des Mischergehäuses ausgebildet und erstrecken sich von zwei Einlassstutzen des Kupptungsendes bis zum Mischerelement. Eine derartige Vorrichtung ist beispielsweise in EP-A-0 730 913 beschrieben.

Je nach der Zusammensetzung der pastösen Komponenten kommt es bei deren Vermischung zu den jeweils gewünschten chemischen Reaktionen. Handelt es sich beispielsweise bei einer der beiden pastösen Komponenten um eine Dental-Abformmasse, so wird durch Zugabe einer zweiten Komponente die Polymerisation dieser Abformmasse initiiert und beschleunigt. Tritt diese zweite Komponente (auch Katalysator genannt) über die Mischereinheit aus der einen Kammer des Vorratsbehältnisses in die andere bzw. wird auch nur der Auslassstutzen der Kammer für die Dental-Abformmasse mit dem Katalysator kontaminiert, so wird die gesamte Vorrichtung unbrauchbar, was je nach dem Füllungsgrad der Kammern mit einem nicht unerheblichen Verlust an hochwertigem Material verbunden ist. Daher müssen die beiden Komponentenströme über eine möglichst lange Wegstrecke voneinander getrennt bleiben und erst im rohrförmigen Abschnitt des Mischergehäuses zusammengebracht werden.

Die pastösen Massen werden in starren Behältern bzw. Kartuschen mit verschiebbaren Bodenwänden angeboten, die mittels manuell oder motorisch vorbewegbaren Stempelelementen vorbewegt werden, um Druck auf die pastösen Massen aufzubringen, wodurch diese aus den Kartuschen bzw. Behältnissen ausgetragen werden. Zwecks Reduktion von Verpackungsmaterial ist man in den letzten Jahren in zunehmendem Maße dazu übergegangen, die pastösen Massen in Schlauchbeuteln anzubieten. Diese müssen, um die pastöse Masse auszubringen, vorzugsweise an ihren stimseitigen Enden geöffnet werden. Dies geschieht beispielsweise mit feststehenden Anstechdomen o.dgl. Schneidelementen, die an der Stirnwand einer Aufnahmekappe angeordnet sind, welche das stirnseitige Ende eines Schlauchbeutels umgibt und einen Austragstutzen aufweist. Aus EP-A-0 787 655 ist es bekannt, in dem Stutzen der Aufnahmekappe ein Anstechröhrchen anzuordnen, das federnd in Richtung auf die Stirnfläche des stirnseitigen Endes des Schlauchbeutels vorgespannt ist. Die bisher bekannten Systeme zum selbsttätigen Öffnen von Schlauchbeuteln sind insofern verbesserungswürdig, als das Eröffnen des Schlauchbeutels stets voraussetzt, dass Druck auf den Schlauchbeutel und damit auch Druck auf die pastöse Masse in dem Schlauchbeutel ausgeübt werden muss. Damit geht der Vorgang des Öffnens des Schlauchbeutels einher mit dem Austragen der pastösen Masse.

Wie bereits oben erwähnt, werden Austragvorrichtungen intermittierend benutzt, wobei der Zeitraum zwischen zwei aufeinanderfolgenden Benutzungen derart groß sein kann, dass das Gemisch in der Mischereinheit aushärtet. Damit muss die Mischereinheit abgenommen und gegen eine neue ersetzt werden, bevor wieder Gemisch ausgetragen werden kann. Bei der Mischereinheit handelt es sich also um ein Einwegteil, bei dem man bestrebt sein sollte, die Anzahl der Teile der Wegwerf-Mischereinheit so gering wie möglich zu halten.

In US-A-4 722 449 ist ein starrer Behälter beschrieben, dessen Öffnung mit einer Membran verschlossen ist. Über die Öffnung ist eine Kappe gestülpt, die einen sich zum Auslassende hin verjüngenden Auslasskanal und einen das Auslassende verschließenden Deckel aufweist. Zwischen dem Auslasskanal und der Membran ist ein Aufsteckdorn angeordnet, der von dem Auslasskanal durch Niederdrücken der Kappe durch die Membran hindurch bewegt wird.

Ein ähnlicher starrer Behälter ist in US-A-4 898 293 beschrieben. Bei diesem Behälter wird eine Verschlusskappe mit einem Anstechdom niedergedrückt, wobei der Anstechdorn eine die Behälteröffnung verschließende Membran aufbricht.

Aus US-A-4 884 705 ist ein starrer Behälter mit einer Verschlusskappe bekannt, die einen axial bewegbaren Anstechkanal aufweist, der durch Niederdrücken eines Schraubverschlusselements durch eine die Behälteröffnung verschließenden Membran bewegt wird.

In DE-A-38 23 708 ist ein weiterer starrer Behälter beschrieben, der einen mit einer Membran verschlossenen Auslassstutzen aufweist. Der Behälter ist als Kolben-Zylindereinheit ausgeführt. Außen an dem Auslassstutzen ist ein Kupplungsteil axial verschiebbar geführt, an das eine Leitung zum Weiterleiten des Inhalts des Behälters anschließbar ist. Das Kupplungsteil weist einen Durchlasskanal auf, der ein der Membran gegenüberliegenden hohles Anstechende zum Durchdringen der Membran aufweist. Durch Bewegen des Behälters auf das Kupplungsteil oder umgekehrt wird die Membran von dem Anstechende des Durchlasskanals durchdrungen und somit der Behälter geöffnet, so dass sein Inhalt durch Ausüben von Druck durch den Kolben durch den Durchlasskanal hindurch ausgetragen wird.

Schließlich ist in DE-A-38 26 887 eine schlauchförmige Verpackung für pastöse Massen beschrieben, die von einer Aufnahmekappe aufgenommen ist, welche einen Auslassstutzen mit einem darin geführten Anstechröhrchen aufweist. Das der Verpackung abgewandte stirnseitige Ende des Anstechröhrchens ist durch ein Griffteil verschlossen, das der axialen und rotatorischen Bewegung des Anstechröhrchens innerhalb des Auslassstutzens dient. Der Auslassstutzen und das Anstechröhrchen weisen jeweils eine radiale Austrittsöffnung auf, die bei vollständig in den Auslassstutzen eingeschobenem Anstechröhrchen durch entsprechendes Verdrehen desselben miteinander fluchtend ausrichtbar sind, so dass das Material aus der Schlauchverpackung radial aus diesem sowie durch das Anstechröhrchen hindurch aus dem Auslassstutzen heraus treten kann.

Eine Aufgabe der Erfindung ist es, eine Vorrichtung zum Öffnen zweier jeweils pastöse Masse beinhaltender Schlauchbeutel und zum Mischen dieser Massen zu schaffen, mit der sich die Schlauchbeutel öffnen lassen, ohne dass die Schlauchbeutel bzw. die pastösen Massen einem externen Druck ausgesetzt sein müssen.

Zu diesem Zwecke schlägt die Erfindung eine Vorrichtung vor, die versehen ist mit den Merkmalen des Anspruchs 1; einzelne Ausgestaltungen der Erfindung sind Gegenstand der Unteransprüche.

Die erfindungsgemäße Vorrichtung ist mit zwei Anstechröhrchen versehen, die in Kanälen eines gemeinsamen Austragstutzens einer Aufnahmekappe axial verschiebbar geführt sind. Durch diese Kanäle oder zweier getrennter Auslassstutzen gelangen bei geöffneten Schlauchbeuteln die pastösen Massen heraus, um in einem Mischer untereinander vermischt zu werden. Der bzw. die Austragstutzen ist/sind an der Stirnwand der Aufnahmekappe von dieser abstehend angeordnet, wobei von der Stirnwand in zum Austragstutzen entgegengesetzter Richtung ein umlaufender Rand absteht. Auf diese Weise umgibt die Aufnahmekappe die stirnseitigen Enden der Schlauchbeutel, deren Stirnflächen an der Stirnwand der Aufnahmekappe an einer von dieser gebildeten Anlageebene anliegen. Die Anstechröhrchen der erfindungsgemäßen Vorrichtung sind manuell aus einer Rückzugsposition in eine Vorschubposition verschiebbar. Diese Verschiebung kann entweder direkt manuell erfolgen, indem die Anstechröhrchen von Hand innerhalb der Kanäle verschoben werden, oder aber indirekt erfolgen, indem ein Betätigungselement manuell bewegt wird, das wiederum über eine Anlagefläche an den Anstechröhrchen anliegt und damit bei eigener Bewegung die Anstechröhrchen mitbewegt. In beiden Fällen lassen sich die Anstechröhrchen aus der Rückzugsposition, in der sie nicht über die von der Stirnwand gebildeten Anlageebene der Aufnahmekappe übersteht, in die Vorschubposition verschieben, in der sie über die Anlageebene übersteht und damit bei von der Aufnahmekappe aufgenommenen Folienschlauchbeuteln in deren Stirnflächen eintauchen und die Schlauchbeutel eröffnet. Die Anstechröhrchen können werksseitig in den bzw. die Stutzen eingebracht sein und befinden sich somit in ihren Rückzugspositionen. Alternativ dazu ist es möglich, dass die Anstechröhrchen von dem Benutzer in den bzw. die Stutzen eingeführt werden. In beiden Fällen ist es zweckmäßig, wenn die Anstechröhrchen in ihren Rückzugspositionen durch eine Verrastung o.dgl. gegen ein unbeabsichtigtes Bewegen aus den Rückzugspositionen heraus gesichert sind. Dies ist vorteilhaft für den Anwender, für den sich damit die Rückzugspositionen taktil als eine definierte Position der Anstechröhrchen darstellt.

Der Vorteil der erfindungsgemäßen Öffnungs- und Misch- sowie Austragvorrichtung besteht darin, dass der Vorgang des Öffnens des Schlauchbeutels von dem Vorgang des Austrägens der pastösen Massen aus den Schlauchbeuteln getrennt ist. Damit stehen die Schlauchbeutel beim Öffnen nicht mehr unter einem erhöhten Druck, so dass versehentlich beim Öffnen auch keine pastöse. Masse mehr aus den Schlauchbeuteln austreten kann. Dies vereinfacht die Handhabung der Schlauchbeutel.

Die erfindungsgemäße Vorrichtung lässt sich sowohl bei Aufnahmekappen für jeweils einzelne Schlauchbeutel als auch bei kombinierten Aufnahmekappen für zwei Schlauchbeutel einsetzen. Diese Anstechröhrchen können untereinander verbunden sein, um sie gemeinsam in die jeweiligen Schlauchbeutel hineinzutreiben. Es ist aber durchaus auch möglich, dass die Anstechröhrchen untereinander nicht verbunden sind, so dass jeder Schlauchbeutel separat "angestochen" werden kann.

Besonders einfach ist es, wenn die Anstechröhrchen in ihren Rückzugspositionen über das der Stirnwand der Aufnahmekappe abgewandte Austragende überstehen. Dann nämlich lässt sich die Axialverschiebung der Anstechröhrchen durch einfaches Hineinbewegen in den bzw. die Stutzen realisieren. Sobald die Anstechröhrchen vollständig in den bzw. die Stutzen hineinbewegt worden sind, ist die Vorschubposition erreicht und die Anstechröhrchen in die Schlauchbeutel hineingetrieben.

Zweckmäßigerweise sind die Anstechröhrchen sowohl in ihren Vorschubpositionen gegen unbeabsichtigte Zurückbewegungen in Richtung auf die Rückzugsposition als auch in ihren Rückzugspositionen gegen ungewollte Bewegungen in die Vorschubposition gesichert. Dies kann, wie weiter oben schon erwähnt, durch eine Verrastung der Anstechröhrchens in bzw. an dem/den Stutzen erfolgen. Eine Alternative hierzu besteht darin, dass die in ihren Rückzugspositionen aus dem/den Stutzen herausragenden Anstechröhrchen durch eine abnehmbare Abdeckkappe geschützt sind, die über den/die Stutzen stülpbar und an dem/den Stutzen fixierbar ist. Diese Abdeckkappe dient der Transportsicherung und wird vor dem Hineinbewegen der Anstechröhrchen abgenommen, beispielsweise abgeschraubt o.dgl., um die Anstechröhrchen freizulegen. Eine Alternative zur Abdeckkappe stellt ein Abstandshalter dar, der zwischen den aus dem/den Stutzen herausragenden Enden der Anstechröhrchen und dem Auftragende des Stutzens/der Stutzen angeordnet ist. Dieser Abstandshalter ist insbesondere als Federclips ausgebildet, der die Anstechröhrchen umgibt. Dieser Federclips kann seitlich von den Anstechröhrchen abgezogen werden, so dass diese anschließend in die Kanäle hinein axial verschiebbar sind. Der Abstandshalter stützt sich zwischen Außenvorsprüngen an den Anstechröhrchen und dem Austragende des Stutzens/der Stutzen ab.

Sofern die Anstechröhrchen nicht direkt manuell sondern über ein Betätigungselement indirekt manuell bewegt werden, kann dieses Betätigungselement als Sicherung zum Schutze der Anstechröhrchens vor unbeabsichtigten Bewegungen aus der Rückzugsposition in die Vorschubposition genutzt werden. Das Betätigungselement ist zweckmäßigerweise nach Art eines auf dem Stutzen angeordneten Hülsenelements ausgebildet, das sich axial über den Stutzen verschieben lässt. Dieses Hülsenelement ist in zwei axialen Positionen, die der Rückzugsposition und der Vorschubposition der Anstechröhrchens entsprechen, am Stutzen bzw. an der Aufnahmekappe gegen unbeabsichtigte Axialbewegungen verriegelbar. Vorteilhafterweise ist das Hülsenelement als Schraubelement ausgebildet, das einen Innengewindeabschnitt aufweist, der mit einem Außengewindeabschnitt am Stutzen in Eingriff bringbar ist. Durch diese beiden Gewindeabschnitte lässt sich das Hülsenelement axial verschieben, um die Anstechröhrchen in den Folierischlauch hineinzutreiben. Sowohl das Hülsenelement als auch der Stutzen weisen beidseitig ihrer Gewindeabschnitte Bereiche auf; die frei von Gewinden sind. Solang die beiden Gewindeabschnitte nicht in Gewindeeingriff miteinander sind, führt eine Verdrehung des Hülsenelements nicht zu einer axialen Verschiebung. Darüber hinaus verhindern die beiden nicht in Gewindeeingriff miteinander stehenden Gewindeabschnitte eine lineare axiale Verschiebung des Hülsenelements. Damit ist dieses vor und nach dem Gewindeeingriff der beiden Gewindeabschnitte gegen ungewollte axiale Bewegungen gesichert.

Nachfolgend werden anhand der Figuren Ausführungsbeispiele der Erfindung näher erläutert. Im einzelnen zeigen:
- Fign. 1 bis 3: ein weiteres Ausführungsbeispiel einer Vorrichtung zum gleichzeitigen Öffnen zweier Schlauchbeutel, wobei die Vorrichtung in unterschiedlichen Betriebszuständen dargestellt ist,
- Fign. 4 und 5: ein drittes Ausführungsbeispiel einer Öffnungsvorrichtung für zwei Schlauchbeutel ebenfalls in unterschiedlichen Betriebsstellungen und
- Fign. 6 und 7: eine alternative Ausgestaltung der Vorrichtung gemäß den Fign. 4 und 5.

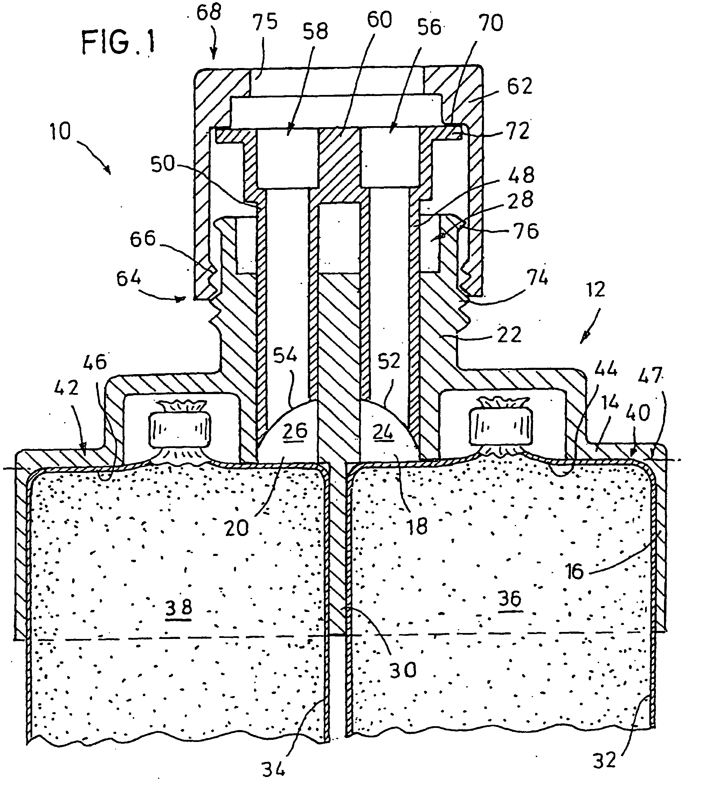

In den Fign. 1 bis 3 ist ein erstes Ausführungsbeispiel einer Vorrichtung 10 zum Öffnen zweier Schlauchbeutel und zum Austragen der pastösen Massen im miteinander vermischten Zustand dargestellt. Die Vorrichtung 10 weist eine Aufnahmekappe 12 auf, der mit einer Stirnwand 14 und einem von dieser abstehenden Rand 16 versehen ist. In der Stirnwand 14 befinden sich zwei Öffnungen 18,20, in deren Bereich von der Stirnwand 14 in zum Rand 16 entgegengesetzter Richtung ein Stutzen 22 absteht. In dem Stutzen 22 befinden sich zwei von den Öffnungen 18,20 aus sich erstreckende Kanäle 24,26, die bis zum der Stirnwand 14 abgewandten Austragende 28 des Stutzens 22 verlaufen. Die Stirnwand 14 weist zwischen den beiden Öffnungen 18,20 eine Trennwand 30 auf, die in Richtung des Randes 16 von der Stirnwand 14 absteht. Auf diese Weise entstehen zwei Aufnahmeräume für zwei Schlauchbeutel 32,34, die jeweils eine pastöse Masse 36,38 beinhalten. Die stirnseitigen Enden 40,42 der beiden Schlauchbeutel 32,34 sind von der Aufnahmekappe 12 bzw. dem Rand 16 und der Zwischenwand 30 umgeben, wobei die Stirnflächen 44,46 der Schlauchbeutel 32,34 entlang einer Anlageebene 47 an der Stirnwand 14 der Aufnahmekappe anliegen. Die Schlauchbeutel 32,34 können mit der Aufnahmekappe 12 fest verbunden sein, was beispielsweise durch Verklebung erfolgt.

In jedem Kanal 24,26 befindet sich ein Anstechröhrchen 48,50, das ein angeschrägtes und damit spitz zulaufendes Anstechende 52,54 aufweist. Die beiden Anstechröhrchen 48,50 sind axial verschiebbar in den Kanälen 24,26 angeordnet und stehen in ihrer Rückzugsposition gemäß Fig. 1 über das Austragende 28 des Stutzens 22 über. An ihren den Anstechenden 52,54 abgewandten Enden 56,58 sind die beiden Anstechröhrchen 48,50 untereinander verbunden, was bei 60 dargestellt ist. Aufgabe der Anstechröhrchen 48,50 ist es zum einen, durch Eindringen in die Stirnflächen 44,46 die Schlauchbeutel 32,34 zu öffnen, und zum anderen bei geöffneten Schlauchbeuteln 32,34 die pastösen Massen 36,38 zwecks Ausbringung derselben passieren zu lassen.

Auf dem Stutzen 22 befindet sich eine Schraubkappe 62, die als Betätigungselement zum axialen Verschieben der Anstechröhrchen 48,50 dient. Die Schraubkappe 62 ist im wesentlichen zylindrisch und weist an ihrem der Aufnahmekappe 12 zugewandten einen Ende 64 einen Innengewindeabschnitt 66 auf. An dem anderen Ende 68 ist die Schraubkappe 62 mit einer Innenschulter 70 versehen, die an einem umlaufenden Radialflansch der beiden Anstechröhrchen 48,50 anliegt. Zwischen der Innenschulter 70 und dem Innengewindeabschnitt 66 ist die Schraubkappe 62 an ihrer Innenseite glatt und vorsprungsfrei ausgebildet.

Im längs seiner axialen Erstreckung mittleren Teil weist der Stutzen 22 einen Außengewindeabschnitt 74 auf, der mit dem Innengewindeabschnitt 66 der Schraubkappe 62 in Gewindeeingriff bringbar ist. Oberhalb und unterhalb des Außengewindeabschnitts 74 des Stutzens 22 weist dieser glatte vorsprungsfreie Bereiche auf, deren Axialerstreckung gleich bzw. geringfügig größer als die Axialerstreckung des Innengewindeabschnitts 66 ist. An seinem der Aufnahmekappe 22 abgewandten vorderen Ende 28 ist der Stutzen 22 mit einem außenliegenden Sicherungsvorsprung 76 versehen.

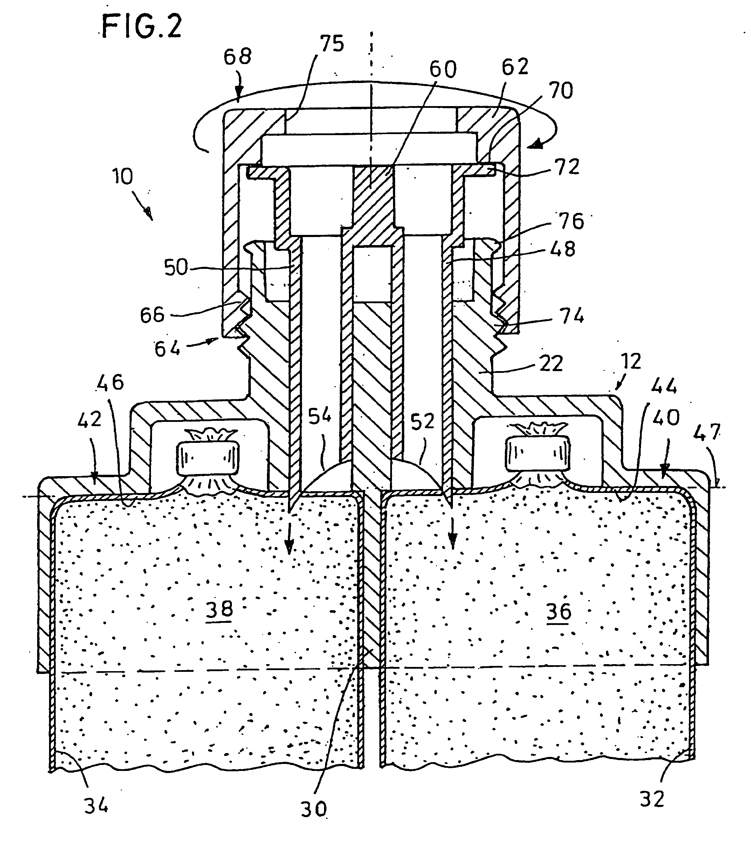

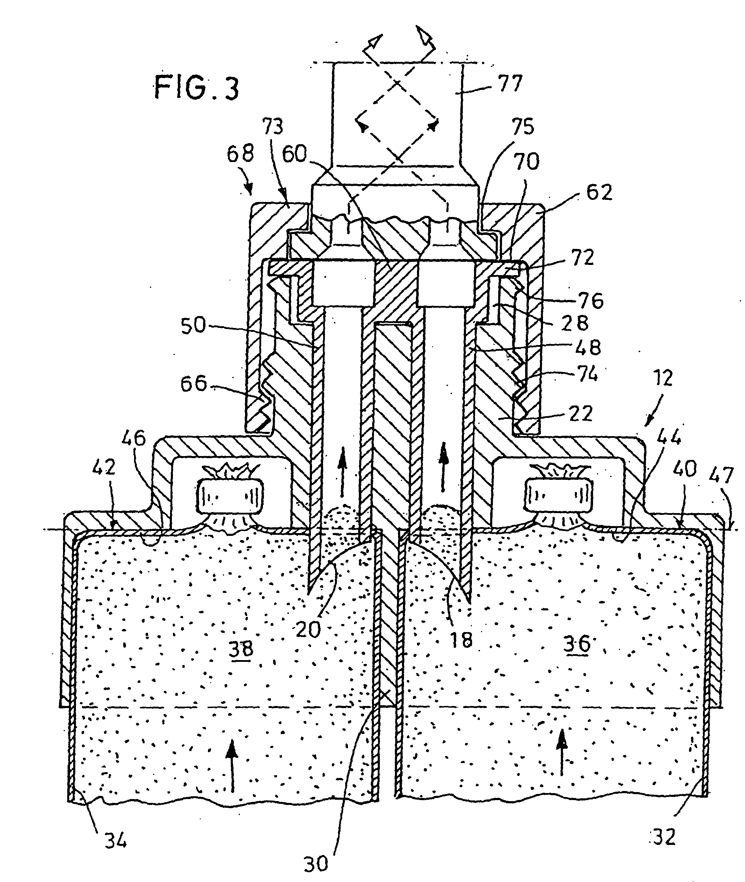

Die Schraubkappe 62 wird werksseitig über den Sicherungsvorsprung 76 auf den Stutzen 22 geschoben, bis sich der Innengewindeabschnitt 66 zwischen dem Sicherungsvorsprung 76 und dem Außengewindeabschnitt 74 des Stutzens 22 befindet (siehe Fig. 1). In dieser Situation befinden sich die Anstechröhrchen 48,50, die vor der Schraubkappe 62 in die Kanäle 24,26 eingesetzt worden sind, in ihrer Rückzugsposition, in der ihre Anstechspitzen 52,54 nicht über die Anlageebene 47 vorstehen. In dieser Rückzugsposition verbleiben die Anstechröhrchen 48,50 auch dann, wenn auf die Schraubkappe 62 in axialer Richtung eine Kraft ausgeübt wird, da die Innengewinde- und Außengewindeabschnitte 66,74 eine Bewegung der Kappe 62 verhindern. Erst durch Drehen der Schraubkappe 62 bei gleichzeitig aufgebrachtem geringen axialen Andruck bewegt sich die Schraubkappe 62 in axialer Richtung, da die beiden Gewindeabschnitte 66,74 in Gewindeeingriff miteinander kommen bzw. sind (siehe Fig. 2). Durch diese axiale Bewegung der Schraubkappe 62 werden die Anstechröhrchen 48,50 ebenfalls axial vorbewegt, so dass ihre Anstechspitzen 52,54 in die Stirnflächen 44,46 der Schlauchbeutel 32,34 einstechen. Die Anstechröhrchen 48,50 befinden sich vollständig in ihrer Vorschubposition, in der ihre Anstechspitzen 52,54 über die Anlageebene 47 überstehen, wenn die beiden Gewindeabschnitte 66,74 mit weiterer Verdrehung der Schraubkappe 62 wiederum außer Eingriff miteinander gebracht sind (siehe Fig. 3). In dieser Situation ist eine axiale Verschiebung der Schraubkappe 62 wiederum durch die sich blockierenden Gewindeabschnitte 66,74 verhindert, so dass die Anstechröhrchen 48,50 in ihrer Vorschubposition gesichert sind.

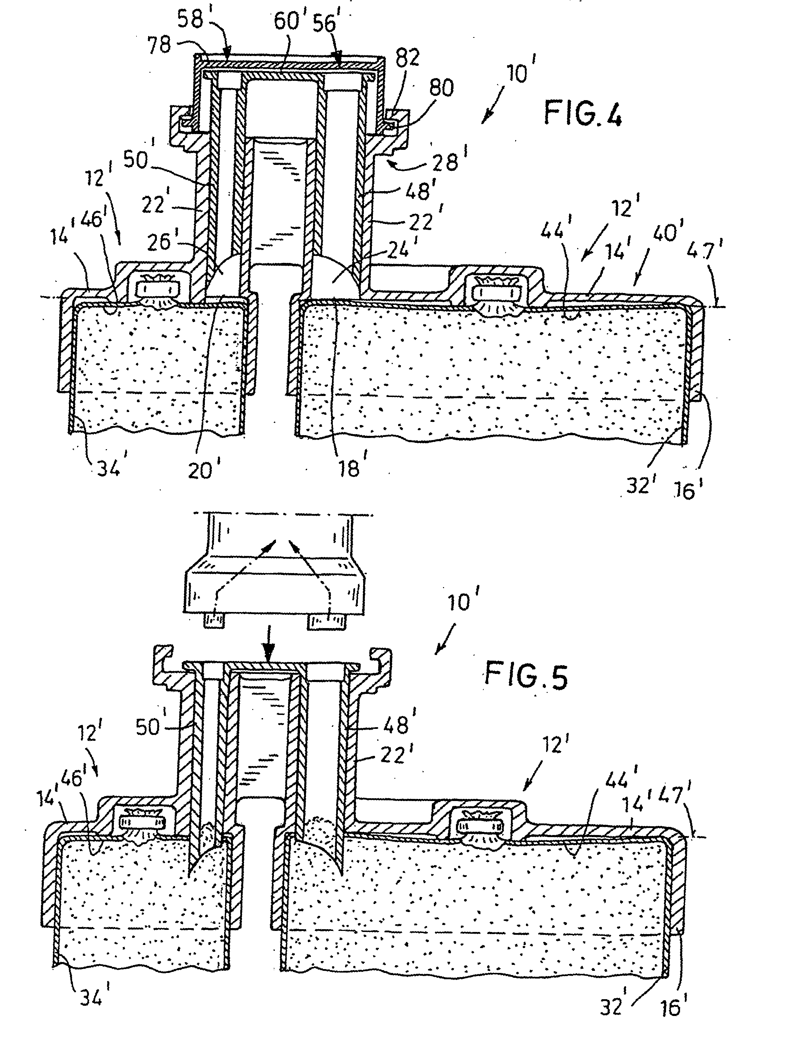

Nun kann, wie in Fig. 3 angedeutet, mit den Anstechröhrchen 48,50 ein dynamischer oder statischer Mischer 77 verbunden werden, in dem das durch die Anstechröhrchen 48,50 gelangende pastöse Material 36,38 miteinander vermischt wird. Der Mischer 77 ist an der Schraubkappe 62 gehalten. Die Schraubkappe 62 hat also eine Doppelfunktion, indem sie ausgehend von Fig. 2 zunächst der Vorbewegung der Anstechröhrchen 48,50 bis in die Schlauchbeutel 32,34 hinein dient (Fign. 3 und 4), um dann durch entsprechende Drehpositionierung für die "passende Ausrichtung" ihrer Öffnung 75 relativ zum Kupplungsende 73 des Mischers 77 zu sorgen, so dass sich dieses Kupplungsende 73 von oben in die Schraubkappe 62 einführen lässt. Anschließend wird dann die Schraubkappe 62 verdreht, um die Fixierung des Mischers 77 nach Art eines Bajonett-Verschlusses zu ermöglichen. Diese Verdrehungen der Schraubkappe 62 erfolgen in der Position gemäß Fig. 3, in der die Schraubkappe 62 außer Gewindeeingriff mit dem Stutzen 22 steht.

Die Arretierung der Schraubkappe 62 in jeweils deren Aufnahmedrehposition und deren Verriegelungsposition und die Begrenzung der Verdrehung lässt sich durch Verrastung der Schraubkappe 62 mit der Aufnahmekappe 12 realisieren. Da der axiale Abstand der Schraubkappe 62 von der Aufnahmekappe 12 beim Aufschrauben auf den Stutzen 22 zwecks Vorbewegung der Anstechröhrchen 48,50 zu den Verhältnissen in der Position gemäß Fig. 3 unterschiedlich ist, kann die Verrastung und Bewegungsbegrenzung konstruktiv so ausgebildet sein, dass hierzu erforderliche Rastvorsprünge und -vertiefungen sowie Anschläge erst dann zusammenwirken, wenn die Gewindeabschnitte 66,74 gemäß Fig. 3 außer Eingriff sind.

Fign. 4 und 5 zeigen eine alternative Ausgestaltung der Öffnungs-, Misch- und Austragvorrichtung 10'. So weit die einzelnen Teile dieser Vorrichtung 10' derjenigen gemäß den Fign. 1 bis 3 entsprechen bzw. funktionsgleich mit diesen sind, sind sie mit den gleichen Bezugszeichen, jedoch einfach gestrichen, bezeichnet. Bei der Vorrichtung 10' ist für jeden Schlauchbeutel 32',34' eine separate Aufnahmekappe 12' mit einer Stirnwand 14' und einem umlaufenden abstehenden Rand 16' vorgesehen. Jede Aufnahmekappe 12' weist einen Stutzen 22' mit einem diesen durchziehenden Kanal 24' bzw. 26' auf. In den beiden Kanälen 24',26' befinden sich wiederum zwei Anstechröhrchen 48',50', die in der Rückzugsposition gemäß Fig. 4 über die Enden 28' der Stutzen 22' überstehen. Die Anstechröhrchen 48',50' sind an ihren den Aufnahmekappen 12' abgewandten Enden 56',58' miteinander bei 60' verbunden. Zur Sicherung der Anstechröhrchen 48',50' gegen unbeabsichtigte Bewegungen aus ihren Rückzugspositionen gemäß Fig. 4 weist die Vorrichtung 10' eine Schutzkappe 78 auf, die mit den Stutzen 22' lösbar verbunden ist, was in Fig. 4 durch korrespondierende Übergreif- und Untergreifvorsprünge 80,82 an den Stutzen 22' bzw. der Kappe 78 realisiert ist. Durch Drehen der Kappe 78 lassen sich diese Vorsprünge 80,82 außer Eingriff miteinander bringen und damit die Kappe 78 abnehmen. Durch manuelles Drücken auf die Enden 56',58' bzw. die Verbindung 60' der beiden Anstechröhrchen 48',50' lassen sich diese axial in den Kanälen 24',26' bis über die Anlageebene 47' hinaus in die Schlauchbeutel 32',34' hinein bewegen (siehe Fig. 5). Anschließend wird ein Mischer auf die Anstechröhrchen 48',50' gesteckt, wobei der Mischer an den Stutzen 22' durch entsprechende Sicherungselemente arretiert ist.

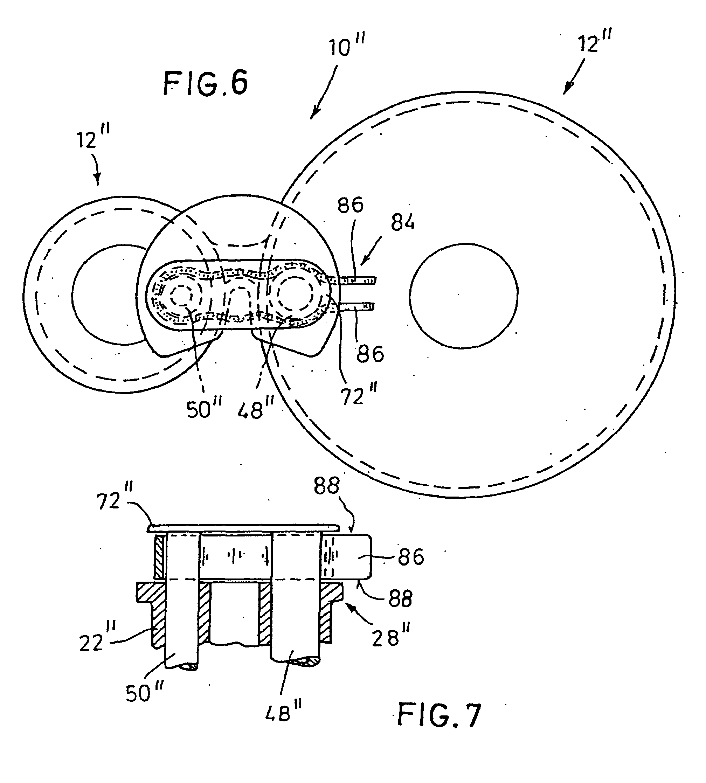

In den Fign. 6 und 7 ist ein drittes Ausführungsbeispiel einer Vorrichtung 10" gezeigt, bei der es sich um eine Alternative zur Vorrichtung 10' handelt. Der Unterschied zur Vorrichtung 10' besteht in der Sicherung der Anstechröhrchen 48",50" gegen unbeabsichtigte Bewegungen aus der Rückzugsposition in die Vorschubposition. Bei der Variante gemäß den Fign. 6 und 7 wird ein als Federclip ausgebildeter Abstandshalter 84 verwendet, der die aus den Enden 28" der Stutzen 22" herausragenden Anstechröhrchen 48",50" von außen umgibt und damit zwischen dem umlaufenden Außenflansch 72" der Anstechröhrchen 48",50" und dem Ende 28" der Stutzen 22" angeordnet ist (siehe Fig. 7). Der Clip 84 ist als zweischenkliger Bügel ausgebildet, dessen beide Bügel 86 an ihren einander gegenüberliegenden Längsrändern 88 einerseits am Flansch 72" und andererseits an den Enden 28" der Stutzen 22" anliegen. Durch seitliches Abziehen des Clip 84 werden die Anstechröhrchen 48",50" freigegeben, so dass sie dann durch Niederdrücken axial vorbewegt werden können.

## Patentansprüche

1. Vorrichtung zum Öffnen zweier jeweils eine pastöse Masse beinhaltender Schlauchbeutel und zum Mischen der pastösen Massen, mit
- einer Aufnahmekappenanordnung (14; 14'; 14") zur Aufnahme der jeweils eine Stirnfläche (44;46;44';46') aufweisenden stimseitigen Enden (40;42;40';42') der Schlauchbeutel (32;34;32';34), wobei die Aufnahmekappenanordnung (14;14';14") eine eine Anlageebene (47;47') für die Stirnfläche (44;46;44';46') der Schlauchbeutel (32;34;32';34) bildende Stirnwand (14;14') und einen von dieser abstehenden Rand (16;16') aufweist,
- zwei in der Stirnwand (14;14') angeordneten Öffnungen (18;20; 18';20'), von denen jede von einem von der Stirnwand (14;14') abstehenden Stutzen (22;22') umgeben ist, und
- zwei Anstechröhrchen (48;50;48';50'), die jeweils axial verschiebbar in den Stutzen (22;22') geführt sind,
**dadurch gekennzeichnet,**
- **dass** die Anstechröhrchen (48;50;48';50') manuell aus einer Rückzugsposition, in der die Anstechröhrchen (48;50;48';50') nicht über die Anlageebene (47;47') vorstehen, in eine Vorschubposition verschiebbar sind, in der die Anstechröhrchen (48;50;48';50') über die Anlageebene (47;47') überstehen, und
- **dass** mit den Anstechröhrchen (48;50;48';50') ein Mischer (77) zum Mischen der aus den Schlauch beuteln (32;34;32';34') und durch die Anstechröhrchen (48;50;48';50') gelangenden pastösen Massen verbindbar ist.

2. Vorrichtung nach Anspruch 1, **dadurch gekennzeichnet, dass** jedes Anstechröhrchen (48;50;48';50') in seiner Vorschubposition gegen unbeabsichtigte Zurückbewegung in Richtung auf die Rückzugsposition gesichert in dem Stutzen (22;22') angeordnet ist.

3. Vorrichtung nach Anspruch 1 oder 2, **dadurch gekennzeichnet, dass** jedes Anstechröhrchen (48;50;48';50') in seiner Rückzugsposition über das der Stirnwand (14;14') abgewandte Austragende (28;28') des Stutzens (22;22') übersteht.

4. Vorrichtung nach einem der Ansprüche 1 bis 3, **dadurch gekennzeichnet, dass** jedes Anstechröhrchen (48;50;48';50') in seiner Rückzugsposition gegen unbeabsichtigte Bewegungen in Richtung auf die Vorschubposition gesichert in dem betreffenden Stutzen (22;22') angeordnet ist.

5. Vorrichtung nach Anspruch 3 und 4, **dadurch gekennzeichnet, dass** über das Austragende (28') des Stutzens (22') eine abnehmbare Abdeckkappe (78) stülpbar und an dem Stutzen (22') fixierbar ist.

6. Vorrichtung nach Anspruch 3 und 4, **dadurch gekennzeichnet, dass** jedes Anstechröhrchen (48";50") an seinem der Stirnwand der Aufnahmekappe (12") abgewandten Ende einen Außenvorsprung (72") aufweist und dass zwischen den Außenvorsprüngen (72") und den Austragenden (28") der Stutzen (22") ein entfernbarer Abstandshalter (84) positionierbar ist.

7. Vorrichtung nach einem der Ansprüche 1 bis 6, **dadurch gekennzeichnet, dass** die beiden Stutzen als eine einteilige Stutzenanordnung (22) mit zwei jeweils ein Anstechröhrchen (48';50') aufnehmenden Kanälen (24',26') ausgebildet sind und dass außen um die Stutzenanordnung (22) ein axial verschiebbares Betätigungselement (62) zum Bewegen der Anstechröhrchen (48;50) aus der Rückzugsposition in die Vorschubposition angeordnet ist, wobei das Betätigungselement (62) eine Anlagefläche (70) zur Anlage an den Anstechröhrchen (48;50) aufweist.

8. Vorrichtung nach Anspruch 7, **dadurch gekennzeichnet, dass** das Betätigungselement (62) in zwei Bewegungspositionen an der Stutzenanordnung (22) und/oder an der Aufnahmekappe (12) gegen unbeabsichtigte Axialbewegungen verriegelbar ist.

9. Vorrichtung nach Anspruch 8, **dadurch gekennzeichnet, dass** das Betätigungselement (62) einen Innengewindeabschnitt (66) und die Stutzenanordnung (22) einen mit dem Innengewindeabschnitt (66) in Gewindeeingriff bringbaren Außengewindeabschnitt (74) aufweist, dass der Außengewindeabschnitt (74) sowohl von der Aufnahmekappe (12) als auch von dem Austragende (28) der Stutzenanordnung (22) um mindestens die axiale Erstreckung des Innengewindeabschnitts (66) des Betätigungselements (62) beabstandet angeordnet ist und dass der Innengewindeabschnitt (66) des Betätigungselements (62) um zumindest die axiale Erstreckung des Außengewindeabschnitts (74) der Stutzenanordnung (22) von der Anlagefläche (70) des Betätigungselements (62) beabstandet an dem der Aufnahmekappe (12) zugewandten Ende (64) des Betätigungselements (62) angeordnet ist.

## Claims

1. A device for opening two tube bags each containing a pasty mass, and for mixing the pasty mass, comprising
- a receiving cap arrangement (14; 14'; 14") for receiving the end sides (40,42;40',42') of the tube bags (32,34;32',34') each comprising an end face (44,46;44',46'), the receiving cap arrangement (14;14';14") comprising an end wall (14;14') forming an abutment plane (47;47') for the end faces (44,46;44',46') of the tube bags (32,34;32',34'), and an edge (16; 16') projecting from the end wall (14; 14'),
- two openings (18,20;18',20') arranged in the end wall (14;14'), each surrounded by a stub (22;22') projecting from the end wall (14;14'), and
- two piercing tubes (48,50;48',50') each guided for axial displacement in the stubs (22;22'),
**characterized in**
- **that** the piercing tubes (48,50;48',50') can be manually displaced from a retracted position in which the piercing tubes (48,50;48',50') do not extend beyond the abutment plane (47;47') into an advanced position in which in the piercing tubes (48,50;48',50') extend beyond the abutment plane (47;47'), and
- **that** piercing tubes (48,50;48',50') have a mixer (77) connected thereto for mixing the pasty masses issued from the tube bags (32,34;32',34') and through the piercing tubes (48,50;48',50').

2. The device according to claim 1, **characterized in that** each piercing tube (48,50;48',50') in its advanced position is secured in the stub (22;22') against unintended return movement in the direction of the retracted position.

3. The device according to claim 1 or 2, **characterized in that** each piercing tube (48,50;48',50') in its retracted position projects beyond the discharge end (28,28') of the stub (22;22') facing away from the end wall (14;14').

4. The device according to any one of claims 1 to 3, **characterized in that** each piercing tube (48,50;48',50') in its retracted position is secured in the respective stub (22;22') against unintended movements in the direction of the advanced position.

5. The device according to claims 3 and 4, **characterized in that** a removable protective cap (78) is adapted to be pushed over the discharge end (28') of the stub (22') and to be fixed to the stub (22').

6. The device according to claims 3 and 4, **characterized in that** each piercing tube (48",50"), on its end facing away from the end wall of the receiving cap (14), is provided with an outer projection (72"), and that a removable spacer (84) can be positioned between the outer projections (72") and the discharge ends (28") of the stubs (22").

7. The device according to any one of claims 1 to 6, **characterized in that** the two stubs are provided as a one-pieced stub arrangement (22) formed with two channels (24',26') each receiving a piercing tube (48",50"), that an axially displaceable operating element (62) is arranged externally around the stub arrangement (22) for moving the piercing tubes (48,50) from the retracted position into the advanced position, the operating element (62) comprising an abutment face (70) for abutment on the piercing tubes (48,50).

8. The device according to claim 7, **characterized in that** the operating element (62) can be locked, in two movement positions, to the stub arrangement (22) and/or to the receiving cap (14) for preventing unintended axial movements.

9. The device according to claim 8, **characterized in that** the operating element (62) comprises an inner thread portion (66) and the stub arrangement (22) comprises an outer thread portion (74) adapted for threaded engagement with the inner thread portion (66), that the outer thread portion (74) is spaced from the end wall of the receiving (14) as well as from the discharge end (28) of the stub arrangement (22) by at least the axial extension of the inner thread portion (66) of the operating element (62), and that the inner thread portion (66) of the operating element (62) is arranged, while spaced from the abutment face (70) of the operating element (62) by at least the axial extension of the outer thread portion (74) of the stub arrangement (22), on the end (64) of the operating element (62) facing towards the receiving cap (14).

## Revendications

1. Dispositif pour ouvrir deux sacs tubulaires contenant chacun une masse pâteuse et pour mélanger les masses pâteuses, comportant :
- un agencement de capuchon de réception (14 ; 14' ; 14") pour recevoir les extrémités frontales (40 ; 42 ; 40' ; 42') du sac tubulaire (32 ; 34 ; 32' ; 34'), présentant chacune une face frontale (44 ; 46 ; 44' ; 46'), le capuchon de réception (14 ; 14' ; 14") présentant un paroi frontale (14 ; 14') formant un plan d'appui (47 ; 47') pour les faces frontales (44 ; 46 ; 44' ; 46') des sacs tubulaires (32 ; 34 ; 32' ; 34') et présentant un bord (16 ; 16') dépassant au-delà de ladite paroi frontale,
- deux ouvertures (18 ; 20 ; 18' ; 20) agencées dans la paroi frontale (14 ; 14'), dont chacune est entourée par un manchon (22 ; 22') faisant saillie de la paroi frontale (14 ; 14'), et
- deux tubes de percée (48 ; 50 ; 48' ; 50') qui sont chacun guidés à déplacement axial dans les manchons (22 ; 22'),
**caractérisé en ce que** :
- les tubes de percée (48 ; 50 ; 48' ; 50') peuvent être déplacés à la main depuis une position de retrait dans laquelle les tubes de percée (48 ; 50 ; 48' ; 50') ne dépassent pas le plan d'appui (47 ; 47'), jusque dans une position d'avancement dans laquelle les tubes de percée (48 ; 50 ; 48' ; 50') dépassent le plan d'appui (47 ; 47'), et
- aux tubes de percée (48 ; 50 ; 48' ; 50') peut être relié un mélangeur (77) pour mélanger les masses pâteuses provenant des sacs tubulaires (32 ; 34 ; 32' ; 34') et parvenant à travers les tubes de percée (48 ; 50 ; 48' ; 50').

2. Dispositif selon la revendication 1, **caractérisé en ce que** dans sa position d'avancent chaque tube de percée (48, 50 ; 48', 50') est agencé dans le manchon (22, 22') de façon bloquée à l'encontre d'un mouvement en retour accidentel en direction de la position de retrait.

3. Dispositif selon l'une ou l'autre des revendications 1 et 2, **caractérisé en ce que** dans sa position de retrait, chaque tube de percée (48, 50 ; 48', 50') dépasse au-delà de l'extrémité de distribution (28 ; 28') du manchon (22, 22') qui est détournée de la paroi frontale (14, 14').

4. Dispositif selon l'une des revendications 1 à 3, **caractérisé en ce que** dans sa position de retrait, chaque tube de percée (48, 50 ; 48', 50') est agencé dans le manchon (22 ; 22') respectif de façon bloquée à l'encontre de mouvements accidentels en direction de la position d'avancement.

5. Dispositif selon les revendications 3 et 4, **caractérisé en ce qu'**un capuchon de couverture amovible (78) est susceptible d'être emmanché par-dessus l'extrémité de distribution (28') du manchon (22') et d'être fixé sur le manchon (22').

6. Dispositif selon les revendications 3 et 4, **caractérisé en ce que** chaque tube de percée (48", 50") présente une saillie extérieure (72") à son extrémité détournée de la paroi frontale du capuchon de réception (12"), et **en ce qu'**un élément écarteur amovible (84) est susceptible d'être positionné entre les saillies extérieures (72") et les extrémités de distribution (28") des manchons (22").

7. Dispositif selon l'une des revendications 1 à 6, **caractérisé en ce que** les deux manchons sont réalisés sous forme d'agencement de manchon (22) d'un seul tenant avec deux canaux (24', 26') recevant chacun un tube de percée (48' ; 50'), et **en ce qu'**il est prévu, à l'extérieur tout autour des manchons (22), un élément d'actionnement (62) déplaçable axialement pour déplacer les tubes de percée (48, 50) hors des positions de retrait jusque dans les positions d'avancement, l'élément d'actionnement (62) présentant une surface d'appui (70) pour l'appui contre les tubes de percée (48, 50).

8. Dispositif selon la revendication 7, **caractérisé en ce que** l'élément d'actionnement (62) est susceptible d'être verrouillé à l'encontre de mouvements axiaux accidentels dans deux positions de déplacement sur le manchon (22) et/ou sur le capuchon de réception (12).

9. Dispositif selon la revendication 8, **caractérisé en ce que** l'élément d'actionnement (62) présente un tronçon taraudé (66) et l'agencement de manchon (22) présentent un tronçon fileté (74) susceptible d'être amené en engagement vissé avec le tronçon taraudé (66), **en ce que** le tronçon fileté, (74) est agencé de façon distante aussi bien par rapport à la paroi frontale du capuchon de réception (12) que par rapport à l'extrémité de distribution (28) de l'agencement de manchon (22), et ceci d'une valeur qui correspond au moins à l'extension axiale du tronçon taraudé (66) de l'élément d'actionnement (62), et **en ce que** le tronçon taraudé (66) de l'élément d'actionnement (62) est agencé à l'extrémité (64) de l'élément d'actionnement (62) qui est tournée vers le capuchon de réception (12), et ceci de façon distante par rapport à la surface d'appui (70) de l'élément d'actionnement (62) au moins de la valeur qui correspond à l'extension axiale du tronçon fileté (74) de l'agencement de manchon (22).
